# EUROPEAN PATENT APPLICATION

(11) **EP 4 641 340 A1**
(43) Date of publication of application: **29.10.2025**
(21) Application number: 23910479.7
(22) Date of filing: 25.12.2023
(51) Int. Cl.: G05D 1/43

(54) **TRAVEL PATH PLANNING METHOD AND APPARATUS, SELF-MOVING ROBOT, AND STORAGE MEDIUM**

(30) Priority: 30.12.2022 CN 202211738968
(71) Applicant: Beijing Roborock Innovation Technology Co., Ltd., Beijing 102206 (CN)
(72) Inventor: ZHANG, Lei, Beijing 102206 (CN)
(74) Representative: Manitz Finsterwald Patent- und Rechtsanwaltspartnerschaft mbB
(86) International application number: PCT/CN2023/141507
(87) International publication number: WO 2024/140553

(57) **Abstract**

A travel path planning method and apparatus, a self-moving robot, and a storage medium. The method comprises: based on present map information, determining an initial path (S102); obtaining a region associated with the initial path (S104); based on present map information and the area of the associated region, determining the proportion of the associated region occupied by an updated region where a map update has already occurred (S106); and when determining that the proportion occupied by the updated region is greater than or equal to a first specified threshold, determining a travel path on the basis of the degree of similarity between the updated region and a region corresponding to the updated region in a historical map (S108).

## Description

The present application claims priority to Chinese Patent Application No. 202211738968.5 filed with the China National Intellectual Property Administration on December 30, 2022, and entitled "METHOD AND APPARATUS FOR PLANNING TRAVEL PATH, SELF-MOBILE ROBOT, AND STORAGE MEDIUM", the content of which is incorporated herein by reference in its entirety.

### TECHNICAL FIELD

The present disclosure relates to the technical field of self-mobile robots, and more specifically, to a method and apparatus for planning a travel path, a self-mobile robot, and a storage medium.

### BACKGROUND

The rationality of the travel path of a self-mobile robot is subject to changes in the environment where the self-mobile robot moves. Once the environment where the self-mobile robot moves changes, it inevitably impacts the travel path of the self-mobile robot. In exemplary technologies, the planning method for a travel path by a self-mobile robot often involves selecting the shortest path. However, while the shortest path has the advantage of a shorter travel distance, it might encounter potential issues such as stalling or impassable areas due to the influence of the actual environment. This significantly affects the smooth travel of the self-mobile robot.

Therefore, planning a more reasonable and effective travel path for self-mobile robots by taking into account the environmental changes has become an urgent technical problem to be solved.

### SUMMARY

Embodiments of the present disclosure provide a method and apparatus for planning a travel path, a self-mobile robot, and a storage medium, aiming to address the technical problem in the related art where the travel path of a self-mobile robot is difficult to effectively adapt to the working environment of the self-mobile robot.

In a first aspect, a method for planning a travel path is provided according to the embodiments of the present disclosure. The method includes: determining an initial path based on current map information; acquiring an associated region of the initial path; determining, based on an area of the associated region and the current map information, a proportion of an updated region in the associated region where a map update has occurred; and determining that the proportion of the updated region is greater than or equal to a first specified threshold, and determining a travel path based on similarity between a corresponding region of the updated region in a historical map and the updated region.

In one embodiment, determining the initial path based on the current map information includes: determining, based on the current map information, a shortest path between a travel starting point and a travel endpoint of a self-mobile robot as the initial path.

In one embodiment, acquiring the associated region of the initial path includes: selecting a feature point on the initial path based on scenario information along the initial path, where there are one or more feature points; and generating an associated region corresponding to the feature point according to a specified outward expansion strategy by using the feature point as an outward expansion origin.

In one embodiment, the current map information includes updated map information and historical non-updated map information in a current map other than the updated map information; and determining, based on the area of the associated region and the current map information, the proportion of the updated region in the associated region where the map update has occurred includes: determining an overlapping region between a region in the current map corresponding to the updated map information and the associated region; and determining a ratio of an area of the overlapping region to the area of the associated region as the proportion of the updated region in the associated region where the map update has occurred.

In one embodiment, determining the travel path based on the similarity between the corresponding region of the updated region in the historical map and the updated region includes: determining that the similarity between the corresponding region of the updated region in the historical map and the updated region is greater than or equal to a second specified threshold, and determining the travel path based on a predetermined optimization strategy; or determining that the similarity between the corresponding region of the updated region in the historical map and the updated region is less than the second specified threshold, and setting the initial path as the travel path.

In one embodiment, before determining the travel path based on the similarity between the corresponding region of the updated region in the historical map and the updated region, the method further includes: determining, based on the updated map information and the historical non-updated map information, current obstacles and historical obstacles in the associated region, respectively; performing clustering based on location information of the current obstacles and location information of the historical obstacles, respectively, to obtain a plurality of current obstacle clusters and a plurality of historical obstacle clusters corresponding to the associated region; determining any one of the current obstacle clusters and any one of the historical obstacle clusters as one obstacle matching set, and traversing the plurality of current obstacle clusters and the plurality of historical obstacle clusters to obtain a plurality of obstacle matching sets, where a number of the plurality of obstacle matching sets is a product of a number of the plurality of current obstacle clusters and a number of the plurality of historical obstacle clusters; determining, for any one of the obstacle matching sets, that the current obstacle cluster and the historical obstacle cluster fall within a predetermined relative location range, and determining that the current obstacle cluster matches the historical obstacle cluster; and determining a proportion of obstacle matching sets, where the current obstacle cluster matches the historical obstacle cluster, out of the plurality of obstacle matching sets as the similarity between the corresponding region of the updated region in the historical map and the updated region in the associated region.

In one embodiment, determining the travel path based on the predetermined optimization strategy includes: setting a passable status marker in a gap area between any two adjacent obstacles in the current map information based on historical map information, where the passable status marker includes a historically passed marker, a historically unpassed marker, and a historically difficult-to-pass marker; and selecting, based on all passable status markers in the current map information, a path with highest smoothness among a plurality of generated candidate paths as the travel path.

In one embodiment, selecting, based on all the passable status markers in the current map information, the path with the highest smoothness among the plurality of generated candidate paths includes: determining a first target path among the plurality of candidate paths, where the passable status markers associated with a path are all the historically passed markers, and setting the first target path as the travel path; and determining that the plurality of candidate paths do not include the first target path, then determining a second target path among the plurality of candidate paths, where the passable status markers associated with the path do not contain the historically unpassed marker, and setting the second target path as the travel path; otherwise, selecting a third target path among the plurality of candidate paths, which contains a least number of the historically unpassed markers, as the travel path.

In one embodiment, a method for determining the smoothness of the candidate paths includes: performing weighted summation processing on all the passable status markers in the candidate paths to obtain the smoothness of the candidate paths, where a weight of the historically passed marker is higher than a weight of the historically difficult-to-pass marker, and the weight of the historically difficult-to-pass marker is higher than a weight of the historically unpassed marker.

In a second aspect, a method for planning a travel path is provided according to the embodiments of the present disclosure. The method includes: determining an initial path based on current map information; acquiring an associated region of the initial path; determining, based on an area of the associated region and the current map information, a proportion of an updated region in the associated region where a map update has occurred; and determining that the proportion of the updated region is less than a first specified threshold, and setting the initial path as a travel path.

In a third aspect, an apparatus for planning a travel path is provided according to the embodiments of the present disclosure. The apparatus includes: an initial path determination unit, configured to determine an initial path based on current map information; an associated region determination unit, configured to acquire an associated region of the initial path; an update proportion determination unit, configured to determine, based on an area of the associated region and the current map information, a proportion of an updated region in the associated region where a map update has occurred; and a path planning unit, configured to determine that the proportion of the updated region is greater than or equal to a first specified threshold, and determine a travel path based on similarity between a corresponding region of the updated region in a historical map and the updated region.

In one embodiment, the initial path determination unit is configured to: determine, based on the current map information, a shortest path between a travel starting point and a travel endpoint of a self-mobile robot as the initial path.

In one embodiment, the associated region determination unit is configured to: select a feature point on the initial path based on scenario information along the initial path, where there are one or more feature points; and generate an associated region corresponding to the feature point according to a specified outward expansion strategy by using the feature point as an outward expansion origin.

In one embodiment, the current map information includes updated map information and historical non-updated map information in a current map other than the updated map information; and the update proportion determination unit is configured to: determine an overlapping region between a region in the current map corresponding to the updated map information and the associated region; and determine a ratio of an area of the overlapping region to the area of the associated region as the proportion of the updated region in the associated region where the map update has occurred.

In one embodiment, the path planning unit is configured to: determine that the similarity between the corresponding region of the updated region in the historical map and the updated region is greater than or equal to a second specified threshold, and determine the travel path based on a predetermined optimization strategy; or determine that the similarity between the corresponding region of the updated region in the historical map and the updated region is less than the second specified threshold, and set the initial path as the travel path.

In one embodiment, the apparatus for planning a travel path further includes: a similarity determination unit, configured to: determine, based on the updated map information and the historical non-updated map information, current obstacles and historical obstacles in the associated region, respectively; perform clustering based on location information of the current obstacles and location information of the historical obstacles, respectively, to obtain a plurality of current obstacle clusters and a plurality of historical obstacle clusters corresponding to the associated region; determine any one of the current obstacle clusters and any one of the historical obstacle clusters as one obstacle matching set, and traverse the plurality of current obstacle clusters and the plurality of historical obstacle clusters to obtain a plurality of obstacle matching sets, where a number of the plurality of obstacle matching sets is a product of a number of the plurality of current obstacle clusters and a number of the plurality of historical obstacle clusters; determine, for any one of the obstacle matching sets, that the current obstacle cluster and the historical obstacle cluster fall within a predetermined relative location range, and determine that the current obstacle cluster matches the historical obstacle cluster; and determine a proportion of obstacle matching sets, where the current obstacle cluster matches the historical obstacle cluster, out of the plurality of obstacle matching sets as the similarity between the corresponding region of the updated region in the historical map and the updated region in the associated region.

In one embodiment, the path planning unit is configured to: set a passable status marker in a gap area between any two adjacent obstacles in the current map information based on historical map information, where the passable status marker includes a historically passed marker, a historically unpassed marker, and a historically difficult-to-pass marker; and select, based on all passable status markers in the current map information, a path with highest smoothness among a plurality of generated candidate paths as the travel path.

In one embodiment, the path planning unit is configured to: determine a first target path among the plurality of candidate paths, where the passable status markers associated with a path are all the historically passed markers, and set the first target path as the travel path; and determine that the plurality of candidate paths do not include the first target path, then determine a second target path among the plurality of candidate paths, where the passable status markers associated with the path do not contain the historically unpassed marker, and set the second target path as the travel path; otherwise, select a third target path among the plurality of candidate paths, which contains a least number of the historically unpassed markers, as the travel path.

In one embodiment, the apparatus for planning a travel path further includes: a smoothness acquisition unit, configured to: perform weighted summation processing on all the passable status markers in the candidate paths to obtain smoothness of the candidate paths, where a weight of the historically passed marker is higher than a weight of the historically difficult-to-pass marker, and the weight of the historically difficult-to-pass marker is higher than a weight of the historically unpassed marker.

In a fourth aspect, an apparatus for planning a travel path is provided according to the embodiments of the present disclosure. The apparatus includes: an initial path determination unit, configured to determine an initial path based on current map information; an associated region determination unit, configured to acquire an associated region of the initial path; an update proportion determination unit, configured to determine, based on an area of the associated region and the current map information, a proportion of an updated region in the associated region where a map update has occurred; and a path planning unit, configured to determine that the proportion of the updated region is less than a first specified threshold and set the initial path as the travel path.

In a fifth aspect, a self-mobile robot is provided according to the embodiments of the present disclosure. The self-mobile robot includes: at least one processor; and a memory communicatively connected to the at least one processor, where the memory stores an instruction executable by the at least one processor, and the instruction is configured to implement the method according to the first aspect.

In a sixth aspect, a storage medium is provided according to the embodiments of the present disclosure. The storage medium stores a computer-executable instruction, and the computer-executable instruction is configured to implement a process of the method according to the first aspect.

The above technical solutions address the technical problem in the related art where the travel path of a self-mobile robot is difficult to effectively adapt to the working environment of the self-mobile robot. First, an initial path can be determined based on the current map information, where the current map information refers to the valid map information that can be used by the self-mobile robot to plan the initial path.

Based on this, the current map information reflects the environmental changes within the activity area of the self-mobile robot. By incorporating considerations of these environmental changes into the initial path generated based on the current map information, the self-mobile robot can acquire an initial path that better adapts to environmental changes. This enhances the environmental adaptability and rationality of the self-mobile robot's travel path planning.

Next, an associated region of the initial path is acquired. The associated region of the initial path refers to the scenario the self-mobile robot passes through during its travel along the initial path, and the scenario along the path includes obstacles. In other words, the associated region of the initial path can reflect the obstacle conditions encountered by the self-mobile robot during its travel along the initial path. During the process of planning the travel path, considering the influence of the associated region of the initial path essentially amounts to taking into account the actual environment encountered by the self-mobile robot during its travel. The obstacle distribution in the actual environment, as reflected by the associated region, assists in further setting a more reasonable travel path for the self-mobile robot.

Furthermore, based on the area of the associated region and the current map information, the proportion of the updated region in the associated region where a map update has occurred is determined.

The current map information can reflect the environmental conditions that the self-mobile robot can accurately grasp at present. The current map information can be used to determine the area of the updated region in the associated region of the current map. Based on the area of the updated region in the associated region and the area of the associated region, the proportion of the updated region where a map update has occurred in the associated region can be further obtained. Correspondingly, the proportion of the updated region where a map update has occurred in the associated region reflects the extent of the environmental condition in the associated region that the self-mobile robot can accurately grasp at present. The extent of the environmental condition that the self-mobile robot can accurately grasp at present is an important factor influencing the self-mobile robot's travel path planning.

The higher the proportion of the updated region in the associated region where a map update has occurred, the more environmental conditions the self-mobile robot can accurately grasp at present, and the stronger the self-mobile robot's capability to plan the travel path. The first specified threshold refers to the minimum proportion of the updated region in the associated region that should be reached when the self-mobile robot's capability to plan the travel path is sufficient to further optimize the travel path. Therefore, when the proportion of the updated region is greater than or equal to the first specified threshold, it indicates that the self-mobile robot has adequate capability to further optimize the travel path.

Furthermore, if the similarity between the corresponding region of the updated region in the historical map and the updated region reflects the level of environmental change in the updated region, the degree of this similarity reflects the magnitude of environmental changes in the updated region. The higher the similarity, the smaller the changes in the updated region, and the more thoroughly the self-mobile robot grasps the environmental condition of the updated region. In this case, the self-mobile robot determines that it has sufficient capability to replan the travel path.

According to the technical solutions, the environmental updates of the associated region along the initial path can be assessed from two dimensions: the proportion of the updated region in the associated region and the similarity between the updated region and a pre-update state thereof. This allows for determining whether the self-mobile robot has the capability to acquire a more optimized travel path based on the changes in obstacles and other environmental updates in the associated region along the initial path. Thus, full consideration is given to the influence of environmental changes and the level of control that the self-mobile robot has over the environmental changes on the travel path planning of the self-mobile robot. This facilitates the self-mobile robot in making the optimal path planning choices based on environmental changes, thereby enhancing the intelligence and rationality of the self-mobile robot's travel path planning. This significantly benefits the optimization of the self-mobile robot's travel smoothness, helps improve the cleaning efficiency of the self-mobile robot, and enhances the user experience.

### BRIEF DESCRIPTION OF THE DRAWINGS

The drawings, which are incorporated into and constitute a part of the specification, illustrate the embodiments consistent with the present disclosure and are used in conjunction with the specification to explain the principles of the present disclosure. Apparently, the drawings in the following description illustrate merely some embodiments of the present disclosure, and those of ordinary skill in the art may still derive other drawings from these drawings without creative efforts.
FIG. 1 illustrates a flowchart of a method for planning a travel path according to one embodiment of the present disclosure;
FIG. 2 illustrates a flowchart of a similarity setting method according to one embodiment of the present disclosure;
FIG. 3 illustrates a schematic diagram of a location where a passable status marker can be set according to one embodiment of the present disclosure;
FIG. 4 illustrates a flowchart of a method for planning a travel path according to another embodiment of the present disclosure;
FIG. 5 illustrates a block diagram of an apparatus for planning a travel path according to one embodiment of the present disclosure;
FIG. 6 illustrates a block diagram of an apparatus for planning a travel path according to another embodiment of the present disclosure; and
FIG. 7 illustrates a block diagram of a self-mobile robot according to one embodiment of the present disclosure.

### DETAILED DESCRIPTION

Exemplary embodiments will now be described more comprehensively with reference to the drawings. However, the exemplary embodiments may be implemented in various forms, and should not be understood as being limited to the examples described herein. On the contrary, these embodiments are provided to make the present disclosure more comprehensive and complete, and comprehensively convey the idea of the exemplary embodiments to a person skilled in the art. The described features, structures, or characteristics may be combined in one or more embodiments in any suitable manner. In the following description, many specific details are provided to give a full understanding of the embodiments of the present disclosure. However, those skilled in the art will appreciate that the technical solutions of the present disclosure may be practiced without one or more of the specific details, or other methods, components, apparatuses, steps, etc., may be employed. In other instances, well-known technical solutions are not shown or described in detail to avoid obscuring aspects of the present disclosure.

In addition, the drawings are only schematic illustrations of the present disclosure and are not necessarily drawn to scale. The same reference numerals in the drawings indicate the same or similar parts, and thus, repeated description thereof will be omitted. Some of the block diagrams shown in the drawings represent functional entities, which are not necessarily required to correspond to physically or logically independent entities. These functional entities may be implemented in the form of software, or in one or more hardware modules or integrated circuits, or across different networks and/or processor apparatuses and/or microcontroller apparatuses.

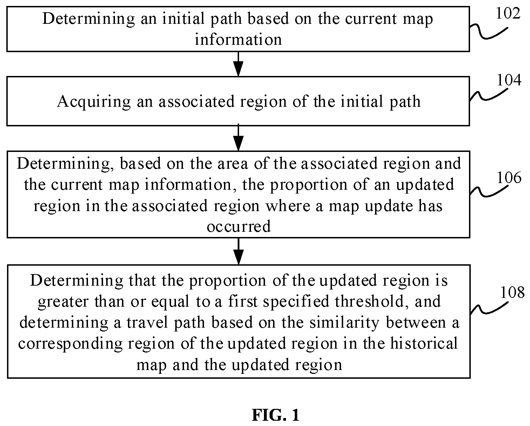

FIG. 1 illustrates a flowchart of a method for planning a travel path according to one embodiment of the present disclosure.

As shown in FIG. 1, the method for planning a travel path according to one embodiment of the present disclosure includes the following steps.

In step 102, an initial path is determined based on the current map information.

Current map information refers to the valid map information that can be used by a self-mobile robot to plan the initial path.

Based on this, the current map information reflects the environmental changes within the activity area of the self-mobile robot. By incorporating considerations of these environmental changes into the initial path generated based on the current map information, the self-mobile robot can acquire an initial path that better adapts to environmental changes. This enhances the environmental adaptability and rationality of the self-mobile robot's travel path planning.

In one embodiment, step 102 specifically includes: based on the current map information, determining the shortest path between the travel starting point and the travel endpoint of the self-mobile robot as the initial path. Thus, the initial path is the shortest route traveled by the self-mobile robot under the current map information.

In step 104, an associated region of the initial path is acquired.

The associated region of the initial path refers to the scenario the self-mobile robot passes through during its travel along the initial path, and the scenario along the path includes obstacles. In other words, the associated region of the initial path can reflect the obstacle conditions encountered by the self-mobile robot during its travel along the initial path.

During the process of planning the travel path, considering the influence of the associated region of the initial path essentially amounts to taking into account the actual environment encountered by the self-mobile robot during its travel. This facilitates the setup of a more reasonable travel path.

In one embodiment, based on the scenario information along the initial path, feature points can be selected on the initial path, where there are one or more feature points. Using the feature points as outward expansion origins, the associated regions corresponding to the feature points are generated according to a specified outward expansion strategy.

The scenario information along the path at least includes obstacles encountered by the self-mobile robot during its travel along the initial path, and the associated regions obtained from outward expansion based on the feature points on the initial path can encompass the obstacles encountered by the self-mobile robot during its travel along the initial path. In other words, the associated region of the initial path is the region around the initial path that contains obstacles.

When selecting feature points on the initial path, the scenario information along the initial path can serve as the basis, and the location of each obstacle in the scenario information along the path can be taken as a feature point.

In one embodiment, for each obstacle in the scenario information along the path, the center point of the obstacle is taken as a feature point.

In another embodiment, any point on the outer edge adjacent to the initial path is taken as a feature point.

In yet another possible design, the midpoint of the outer edge adjacent to the initial path is taken as a feature point.

In still another possible design, the point on the outer edge adjacent to the initial path that is closest in vertical distance to the initial path is taken as a feature point.

In addition, feature points may also be selected at any location on the initial path. The methods for selecting a feature point in the present disclosure include, but are not limited to, the various methods described above, and may be any selection method that meets the actual requirements of path planning.

Next, using the feature point as the outward expansion origin, the associated region is obtained through outward expansion.

In one embodiment, the specified outward expansion strategy includes: taking the feature point as the specified point within a specified polygon to set the specified polygon, such that the region covered by the specified polygon is the associated region corresponding to the feature point.

The specified polygon is optionally a rectangle, and the specified point is optionally the center point of the specified polygon. Based on this, the vertical distance from the specified point to any side of the specified polygon may be set as the specified distance. In other words, the specified distance is the outward expansion distance taking the feature point as the outward expansion origin.

According to the above technical solutions, an associated region corresponding to the initial path can be obtained. The obstacle distribution in the actual environment, as reflected by the associated region, assists in further setting a more reasonable travel path for the self-mobile robot.

In step 106, based on the area of the associated region and the current map information, the proportion of the updated region in the associated region where a map update has occurred is determined.

The current map information can reflect the environmental conditions that the self-mobile robot can accurately grasp at present. The current map information can be used to determine the area of the updated region in the associated region of the current map. Based on the area of the updated region in the associated region and the area of the associated region, the proportion of the updated region where a map update has occurred in the associated region can be further obtained. Correspondingly, the proportion of the updated region where a map update has occurred in the associated region reflects the extent of the environmental condition in the associated region that the self-mobile robot can accurately grasp at present. The extent of the environmental condition that the self-mobile robot can accurately grasp at present is an important factor influencing the self-mobile robot's travel path planning.

The current map information includes the updated map information and the historical non-updated map information in the current map other than the updated map information. Generally, before planning the initial path, a self-mobile robot scans the current environment and updates the map information based on the scanning result. Therefore, the current map information generally includes the updated map information obtained after the self-mobile robot scans the current environment. In addition, for regions in the current environment that the self-mobile robot is unable to update, the map information obtained during its historical travel may be acquired. Thus, the current map information includes the updated map information and the historical non-updated map information in the current map other than the updated map information.

Based on this, step 106 specifically includes: determining the overlapping region between the region in the current map corresponding to the updated map information and the associated region; and determining the ratio of the area of the overlapping region to the area of the associated region as the proportion of the updated region in the associated region where the map update has occurred. That is, based on the intersection of the updated map information in the current map information and the associated region, the area of the updated region where a map update has occurred in the associated region can be determined. Then, the ratio of the area of the updated region to the area of the associated region is obtained as the proportion.

In step 108, it is determined that the proportion of the updated region is greater than or equal to a first specified threshold, and the travel path is determined based on the similarity between the corresponding region of the updated region in the historical map and the updated region.

The updated map information reflects the environmental conditions that the self-mobile robot can accurately grasp at present. Correspondingly, the proportion of the updated region where a map update has occurred in the associated region reflects the extent of the environmental condition in the associated region that the self-mobile robot can accurately grasp at present. The extent of the environmental condition that the self-mobile robot can accurately grasp at present is an important factor influencing the self-mobile robot's travel path planning.

The higher the proportion of the updated region in the associated region where a map update has occurred, the more environmental conditions the self-mobile robot can accurately grasp at present, and the stronger the self-mobile robot's capability to plan the travel path. The first specified threshold refers to the minimum proportion of the updated region in the associated region that should be reached when the self-mobile robot's capability to plan the travel path is sufficient to further optimize the travel path. Therefore, when the proportion of the updated region is greater than or equal to the first specified threshold, it indicates that the self-mobile robot has adequate capability to further optimize the travel path.

Furthermore, if the similarity between the corresponding region of the updated region in the historical map and the updated region reflects the level of environmental change in the updated region, the degree of this similarity reflects the magnitude of environmental changes in the updated region. The higher the similarity, the smaller the changes in the updated region, and the more thoroughly the self-mobile robot grasps the environmental condition of the updated region. In this case, the self-mobile robot determines that it has sufficient capability to replan the travel path.

According to the technical solutions, the environmental updates of the associated region along the initial path can be assessed from two dimensions: the proportion of the updated region in the associated region and the similarity between the updated region and a pre-update state thereof. This allows for determining whether the self-mobile robot has the capability to acquire a more optimized travel path based on the changes in obstacles and other environmental updates in the associated region along the initial path. Thus, full consideration is given to the influence of environmental changes and the level of control that the self-mobile robot has over the environmental changes on the travel path planning of the self-mobile robot. This facilitates the self-mobile robot in making the optimal path planning choices based on environmental changes, thereby enhancing the intelligence and rationality of the self-mobile robot's travel path planning. This significantly benefits the optimization of the self-mobile robot's travel smoothness, helps improve the cleaning efficiency of the self-mobile robot, and enhances the user experience.

In one embodiment, step 110 includes: determining that the similarity between the corresponding region of the updated region in the historical map and the updated region is greater than or equal to a second specified threshold, and determining the travel path based on a predetermined optimization strategy; or determining that the similarity between the corresponding region of the updated region in the historical map and the updated region is less than the second specified threshold, and setting the initial path as the travel path.

The second specified threshold represents the minimum similarity between the updated region and the corresponding region thereof in the historical map when the self-mobile robot's capability to plan the travel path is sufficient to further optimize the travel path. That is, when the similarity between the updated region and the corresponding region is sufficiently high, it indicates that changes in the updated region are minimal, and the self-mobile robot has a better grasp of the environmental condition of the updated region. In this case, the self-mobile robot determines that it has sufficient capability to replan the travel path.

Conversely, when the similarity between the corresponding region of the updated region in the historical map and the updated region is determined to be less than the second specified threshold, it indicates that there are many changes in the updated region. The environmental changes result in an insufficient grasp of the environmental condition in the updated region by the self-mobile robot. In this case, the self-mobile robot's capability is insufficient, and it is not suitable to replan the travel path. In this case, to avoid an unreasonable planned travel path due to the insufficient travel path planning capability of the self-mobile robot, the initial path may be prioritized for adoption.

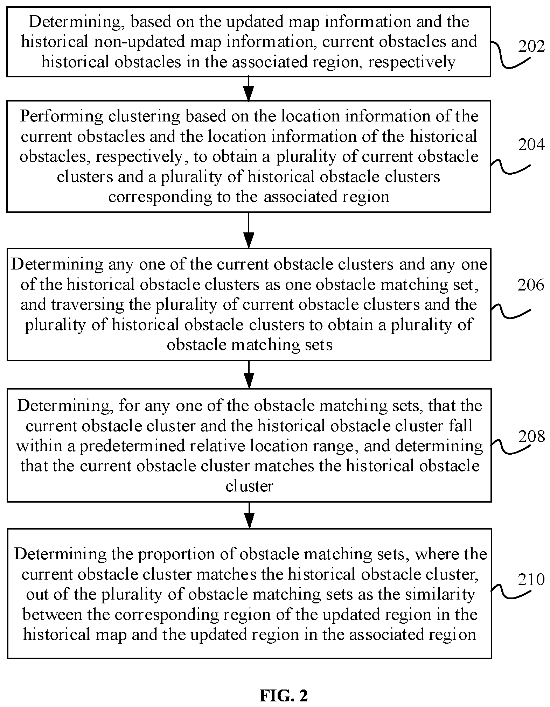

FIG. 2 illustrates a flowchart of a similarity setting method according to one embodiment of the present disclosure.

As shown in FIG. 2, based on the above technical solutions, the method of setting the similarity for the associated region includes the following steps.

In step 202, based on the updated map information and the historical non-updated map information, the current obstacles and historical obstacles in the associated region are determined, respectively.

In other words, the obstacle distribution in the associated region before an environmental update has occurred and the obstacle distribution in the associated region after the environmental update has occurred can be determined. Obstacles are the primary objects in the environment that influence the travel path of the self-mobile robot. Therefore, when evaluating the environmental changes in the associated region, it is necessary to acquire the obstacle distribution in the associated region before and after the update. Furthermore, the obstacle distribution in the associated region before and after the update can reflect the similarity between the updated region in the associated region before the update and after the update.

In step 204, clustering is performed based on the location information of the current obstacles and the location information of the historical obstacles, respectively, to obtain a plurality of current obstacle clusters and a plurality of historical obstacle clusters corresponding to the associated region.

The location information of current obstacles can be acquired based on the updated map information in the current map information. Additionally, the location information of historical obstacles can be acquired based on the historical non-updated map information in the current map information.

In one embodiment, the location information refers to the planar location information of obstacles in the environment. Furthermore, a reference coordinate system may be set for the environment, and two-dimensional coordinates may be determined for each obstacle.

In another embodiment, the location information refers to the three-dimensional location information of obstacles in the environment. Furthermore, a reference coordinate system may be set for the environment, and planar location coordinates as well as height information may be determined for each obstacle.

Specifically, an Euclidean distance clustering method may be used to acquire a plurality of current obstacle clusters and a plurality of historical obstacle clusters corresponding to the associated region.

In step 206, any one of the current obstacle clusters and any one of the historical obstacle clusters are determined as one obstacle matching set, and the plurality of current obstacle clusters and the plurality of historical obstacle clusters are traversed to obtain a plurality of obstacle matching sets, where the number of the plurality of obstacle matching sets is the product of the number of the plurality of current obstacle clusters and the number of the plurality of historical obstacle clusters.

Each current obstacle cluster from the plurality of current obstacle clusters is paired with each historical obstacle cluster from the plurality of historical obstacle clusters for one-to-one matching. For example, if there are m current obstacle clusters and n historical obstacle clusters, the i-th current obstacle cluster and the j-th historical obstacle cluster form one obstacle matching set (i, j), where i ∈ [1, m], and j ∈ [1, n]. Ultimately, m × n obstacle matching sets can be obtained.

In step 208, for any one of the obstacle matching sets, it is determined that the current obstacle cluster and the historical obstacle cluster fall within a predetermined relative location range, and it is determined that the current obstacle cluster matches the historical obstacle cluster.

For any one of the obstacle matching sets, if the relative distance between the current obstacle cluster and the historical obstacle cluster is sufficiently small, it is determined that the obstacles corresponding to the two clusters match and are the same obstacle. Furthermore, the predetermined relative location range includes, but is not limited to, cases where the relative distance is less than or equal to a predetermined matching distance.

In step 210, the proportion of obstacle matching sets, where the current obstacle cluster matches the historical obstacle cluster, out of the plurality of obstacle matching sets is determined as the similarity between the corresponding region of the updated region in the historical map and the updated region in the associated region.

The more obstacle matching sets where the current obstacle cluster matches the historical obstacle cluster, the more identical obstacles there are between the updated map information and the historical non-updated map information in the associated region, indicating fewer updates in the map of the associated region. Therefore, for any associated region, the proportion of obstacle matching sets, where the current obstacle cluster matches the historical obstacle cluster, out of all obstacle matching sets thereof can be used as the similarity between the updated region thereof and the pre-update state thereof.

Through the above technical solutions, the actual environmental changes can be fully taken into account, enabling the calculation of the similarity between the updated region in an associated region along the initial path and its pre-update state. This similarity serves as one of the dimensions for evaluating the environmental update condition of the associated region and has a crucial impact on assessing whether the self-mobile robot has the capability to acquire a more optimized travel path. Therefore, the technical solutions enable the acquisition of accurate and effective similarity, which positively impacts, to a certain extent, the intelligence and rationality of the travel path planning by the self-mobile robot. This contributes to improving the cleaning efficiency of the self-mobile robot.

In another embodiment, the total number of matched obstacles within the current obstacles and historical obstacles in the associated region can be obtained, and the proportion of the total number of matched obstacles out of the total number of current obstacles and historical obstacles in the associated region is set as the similarity.

In yet another possible design, the number of matched obstacle pairs within the current obstacles and historical obstacles in the associated region can be obtained, and the ratio of the number of matched obstacle pairs to the number of current obstacles in the associated region is set as the similarity.

In still another possible design, the number of matched obstacle pairs within the current obstacles and historical obstacles in the associated region can be obtained, and the ratio of the number of matched obstacle pairs to the number of historical obstacles in the associated region is set as the similarity.

It should be noted that the methods for acquiring the similarity include, but are not limited to, the various examples described above and may also be any other methods adapted to the path planning requirements of self-mobile robots, which are not limited herein.

Based on any one of the above technical solutions, the method for determining the travel path based on a predetermined optimization strategy specifically includes: setting a passable status marker in a gap area between any two adjacent obstacles in the current map information based on the historical map information, where the passable status marker includes a historically passed marker, a historically unpassed marker, and a historically difficult-to-pass marker; and selecting, based on all the passable status markers in the current map information, a path with the highest smoothness among a plurality of generated candidate paths as the travel path.

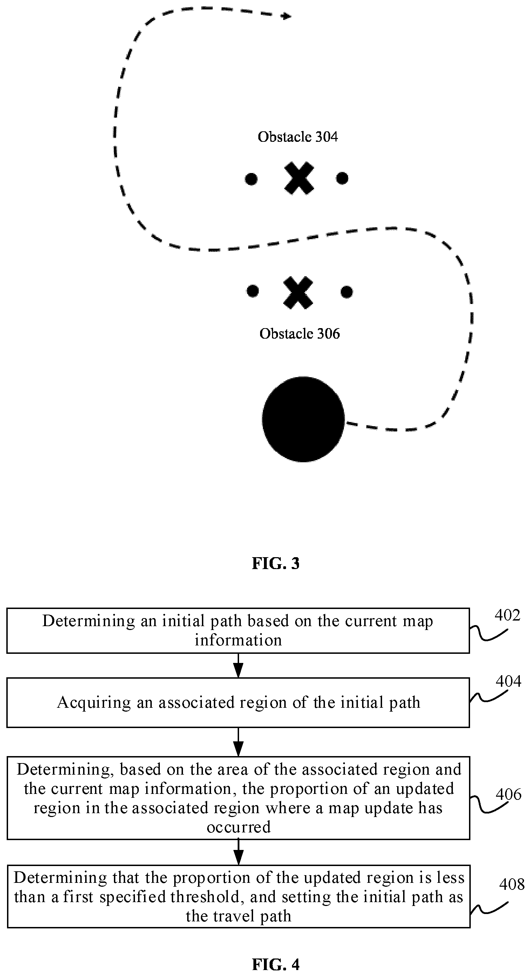

As shown in FIG. 3, the self-mobile robot 302 often needs to pass through the gap area between adjacent obstacles 304 and 306 while traveling. In this regard, the ease of passage through the gap area between any two adjacent obstacles in the current map information can be determined based on historical travel information, where this ease of passage can be reflected by setting passable status markers.

The self-mobile robot 302 often plans a plurality of candidate paths during actual operation. Therefore, the self-mobile robot can traverse the plurality of candidate paths to select the path with the highest smoothness. In other words, the self-mobile robot can traverse the plurality of candidate paths to select the path with the lowest cost as the travel path.

The ease of passage between obstacles reflects the impact of the obstacle distribution, as the environmental information, on the self-mobile robot 302. Therefore, selecting the path with the lowest cost for the self-mobile robot 302 based on the ease of passage between obstacles for the self-mobile robot 302 can fully account for the influence of the obstacle distribution on the travel of the self-mobile robot 302. This facilitates the self-mobile robot 302 in more intelligently and rationally planning the travel path based on the actual environment.

In one embodiment, the step of selecting, based on all the passable status markers in the current map information, the path with the highest smoothness among the plurality of generated candidate paths as the travel path includes: determining a first target path among the plurality of candidate paths, where the passable status markers associated with the path are all the historically passed markers, and setting the first target path as the travel path; and determining that the plurality of candidate paths do not include the first target path, then determining a second target path among the plurality of candidate paths, where the passable status markers associated with the path do not contain the historically unpassed marker, and setting the second target path as the travel path; otherwise, selecting a third target path among the plurality of candidate paths, which contains the least number of the historically unpassed markers, as the travel path.

In this technical solution, a passable status marker serves as the standard for reflecting smoothness, prioritizing paths where all the passable status markers are historically passed markers as the travel path. If no path exists where the passable status markers are all the historically passed markers, then prioritize the path that does not contain the historically unpassed markers as the travel path. Furthermore, if the plurality of candidate paths all contain the historically unpassed markers, then prioritize the path with the least number of historically unpassed markers as the travel path.

Based on the above technical solution, full consideration can be given to the influence of the obstacle distribution, an environmental factor, on the travel of the self-mobile robot, thereby flexibly selecting the path that is easier to pass as the travel path. This helps improve the cleaning efficiency of the self-mobile robot.

In another embodiment, the method for determining the smoothness of the candidate paths includes: performing weighted summation processing on all passable status markers in the candidate paths to obtain the smoothness of the candidate paths.

In this technical solution, corresponding weights can be respectively set for historically passed markers, historically unpassed markers, and historically difficult-to-pass markers. The weight of the historically passed markers is higher than that of the historically difficult-to-pass markers, and the weight of the historically difficult-to-pass markers is higher than that of the historically unpassed markers. Next, weighted summation processing is performed on all passable status markers in each of the candidate paths to obtain the smoothness of each candidate path. Finally, among all candidate paths, the path with the highest smoothness is selected as the travel path.

In another embodiment, the width of the gap area between every two adjacent obstacles in the current map information can be acquired, and a corresponding weight is set for the gap area based on the width thereof. Furthermore, for each candidate path, a weighted summation is performed on the gap areas that the candidate path involves to obtain the corresponding smoothness of the candidate path. Finally, among all the candidate paths, the path with the highest smoothness is selected as the travel path.

Based on the above technical solution, full consideration can be given to the influence of the obstacle distribution, an environmental factor, on the travel of the self-mobile robot. By setting weights for different passable status markers, the selection of paths that are easier to pass as the travel path becomes more accurate and reliable, which helps improve the cleaning efficiency of the self-mobile robot.

FIG. 4 illustrates a flowchart of a method for planning a travel path according to another embodiment of the present disclosure.

As shown in FIG. 4, the method for planning a travel path according to another embodiment of the present disclosure includes the following steps.

In step 402, an initial path is determined based on the current map information.

In step 404, an associated region of the initial path is acquired.

In step 406, based on the area of the associated region and the current map information, the proportion of the updated region in the associated region where a map update has occurred is determined.

In step 408, it is determined that the proportion of the updated region is less than a first specified threshold, and the initial path is set as the travel path.

The smaller the proportion of the updated region in the associated region where a map update has occurred, the less the environmental conditions the self-mobile robot can accurately grasp at present. This indicates insufficient capability for planning the travel path, making it unsuitable to replan the travel path. In this case, to avoid an unreasonable planned travel path due to the insufficient travel path planning capability of the self-mobile robot, the initial path may be prioritized for adoption.

Thus, full consideration is given to the influence of environmental changes and the level of control that the self-mobile robot has over the environmental changes on the travel path planning of the self-mobile robot. This facilitates the self-mobile robot in making the optimal path planning choices based on environmental changes, thereby enhancing the intelligence and rationality of the self-mobile robot's travel path planning.

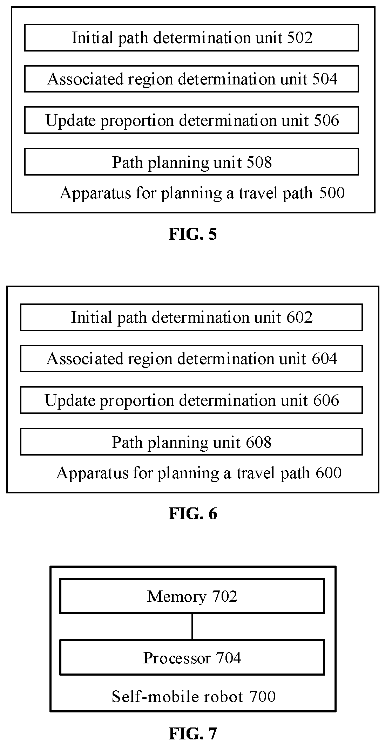

FIG. 5 illustrates a block diagram of an apparatus for planning a travel path according to one embodiment of the present disclosure.

As shown in FIG. 5, an apparatus 500 for planning a travel path according to one embodiment of the present disclosure includes: an initial path determination unit 502, configured to determine an initial path based on the current map information; an associated region determination unit 504, configured to acquire an associated region of the initial path; an update proportion determination unit 506, configured to determine, based on the area of the associated region and the current map information, the proportion of an updated region in the associated region where a map update has occurred; and a path planning unit 508, configured to determine that the proportion of the updated region is greater than or equal to a first specified threshold, and determine the travel path based on the similarity between the corresponding region of the updated region in the historical map and the updated region.

In one embodiment, the associated region determination unit 504 is configured to: select a feature point on the initial path based on the scenario information along the initial path, where there are one or more feature points; and generate an associated region corresponding to the feature point according to a specified outward expansion strategy by using the feature point as an outward expansion origin.

In one embodiment, the path planning unit 508 is configured to: determine that the similarity between the corresponding region of the updated region in the historical map and the updated region is greater than or equal to a second specified threshold, and determine the travel path based on a predetermined optimization strategy; or determine that the similarity between the corresponding region of the updated region in the historical map and the updated region is less than the second specified threshold, and set the initial path as the travel path.

In one embodiment, the apparatus 500 for planning a travel path further includes: a similarity determination unit, configured to determine, based on the updated map information and the historical non-updated map information, current obstacles and historical obstacles in the associated region, respectively; perform clustering based on the location information of the current obstacles and the location information of the historical obstacles, respectively, to obtain a plurality of current obstacle clusters and a plurality of historical obstacle clusters corresponding to the associated region; determine any one of the current obstacle clusters and any one of the historical obstacle clusters as one obstacle matching set, and traverse the plurality of current obstacle clusters and the plurality of historical obstacle clusters to obtain a plurality of obstacle matching sets, where the number of the plurality of obstacle matching sets is the product of the number of the plurality of current obstacle clusters and the number of the plurality of historical obstacle clusters; determine, for any one of the obstacle matching sets, that the current obstacle cluster and the historical obstacle cluster fall within a predetermined relative location range, and determine that the current obstacle cluster matches the historical obstacle cluster; and determine the proportion of obstacle matching sets, where the current obstacle cluster matches the historical obstacle cluster, out of the plurality of obstacle matching sets as the similarity between the corresponding region of the updated region in the historical map and the updated region in the associated region.

In one embodiment, the path planning unit 508 is configured to: set a passable status marker in a gap area between any two adjacent obstacles in the current map information based on the historical map information, where the passable status marker includes a historically passed marker, a historically unpassed marker, and a historically difficult-to-pass marker; and select, based on all the passable status markers in the current map information, a path with the highest smoothness among a plurality of generated candidate paths as the travel path.

In one embodiment, the path planning unit 508 is configured to: determine a first target path among the plurality of candidate paths, where all the passable status markers associated with the path are the historically passed markers, and set the first target path as the travel path; and determine that the plurality of candidate paths do not include the first target path, then determine a second target path among the plurality of candidate paths, where the passable status markers associated with the path do not contain the historically unpassed marker, and set the second target path as the travel path; otherwise, select a third target path among the plurality of candidate paths, which contains the least number of the historically unpassed markers, as the travel path.

In one embodiment, the apparatus 500 for planning a travel path further includes: a smoothness acquisition unit, configured to perform weighted summation processing on all the passable status markers in the candidate paths to obtain the smoothness of the candidate paths, where the weight of the historically passed marker is higher than that of the historically difficult-to-pass marker, and the weight of the historically difficult-to-pass marker is higher than that of the historically unpassed marker.

The apparatus 500 for planning a travel path adopts the solution described in any one of the above embodiments. Therefore, the apparatus possesses all the technical effects discussed above, which will not be reiterated here.

FIG. 6 illustrates a block diagram of an apparatus for planning a travel path according to another embodiment of the present disclosure.

As shown in FIG. 6, an apparatus 600 for planning a travel path according to another embodiment of the present disclosure includes: an initial path determination unit 602, configured to determine an initial path based on the current map information; an associated region determination unit 604, configured to acquire an associated region of the initial path; an update proportion determination unit 606, configured to determine, based on the area of the associated region and the current map information, the proportion of an updated region in the associated region where a map update has occurred; and a path planning unit 608, configured to determine that the proportion of the updated region is less than a first specified threshold and set the initial path as the travel path.

The apparatus 600 for planning a travel path adopts the solution described in any one of the above embodiments. Therefore, the apparatus possesses all the technical effects discussed above, which will not be reiterated here.

FIG. 7 illustrates a block diagram of a self-mobile robot according to one embodiment of the present disclosure.

As shown in FIG. 7, a self-mobile robot 700 according to one embodiment of the present disclosure includes: at least one memory 702; and a processor 704 communicatively connected to the at least one memory 702. The memory stores an instruction executable by the at least one processor 704, and the instruction is configured to implement the solution described in any one of the above embodiments. Therefore, the self-mobile robot 700 exhibits the same technical effects as those described in any one of the above embodiments, which will not be reiterated here.

In addition, a storage medium is provided according to the embodiments of the present disclosure. The storage medium stores a computer-executable instruction. The computer-executable instruction is configured to perform the following steps: determine, based on current map information, an initial path and historical non-updated map information in the current map other than the updated map information; acquire an associated region of the initial path; determine, based on the area of the associated region and the current map information, the proportion of an updated region in the associated region where a map update has occurred; and determine that the proportion of the updated region is greater than or equal to a first specified threshold, and determine the travel path based on the similarity between the corresponding region of the updated region in the historical map and the updated region.

It should be noted that the functions or steps that can be implemented by the storage medium or electronic device correspond to the relevant descriptions in the method embodiments previously mentioned. To avoid repetition, the functions or steps will not be described one by one here.

The technical solutions of the present disclosure have been described in detail above in conjunction with the drawings. According to the technical solutions of the present disclosure, the environmental updates of the associated region along the initial path can be assessed from two dimensions: the proportion of the updated region in the associated region and the similarity between the updated region and a pre-update state thereof. This allows for determining whether the self-mobile robot has the capability to acquire a more optimized travel path based on the changes in obstacles and other environmental updates in the associated region along the initial path. Thus, full consideration is given to the influence of environmental changes and the level of control that the self-mobile robot has over the environmental changes on the travel path planning of the self-mobile robot. This facilitates the self-mobile robot in making the optimal path planning choices based on environmental changes, thereby enhancing the intelligence and rationality of the self-mobile robot's travel path planning. This significantly benefits the optimization of the self-mobile robot's travel smoothness, helps improve the cleaning efficiency of the self-mobile robot, and enhances the user experience.

It should be noted that although several modules or units of the device for action execution are mentioned in the above detailed description, such division is not mandatory. In practice, according to the embodiments of the present disclosure, the features and functions of two or more modules or units described above may be embodied in one module or unit. Conversely, the features and functions of one module or unit described above may be further divided to be embodied by a plurality of modules or units.

In addition, although the steps of the method in the present disclosure are described in a specific order in the drawings, this does not require or imply that these steps are necessarily performed in this specific order, or that all of the steps shown are necessarily performed to achieve the desired results. Additionally or alternatively, some steps may be omitted, a plurality of steps may be combined into one step for execution, and/or one step may be divided into a plurality of steps for execution, among other variations.

Based on the description of the foregoing embodiments, a person skilled in the art can easily understand that the example embodiments described herein may be implemented by software, or may be implemented by software in combination with necessary hardware. Therefore, the technical solutions according to the embodiments of the present disclosure may be implemented in the form of a software product. The software product may be stored in a non-volatile storage medium (which may be a CD-ROM, a USB flash drive, a mobile hard disk, or the like) or on a network, and includes several instructions for instructing a computing device (which may be a personal computer, a server, a mobile terminal, a network device, or the like) to perform the method according to the embodiments of the present disclosure.

Other embodiments of the present disclosure are apparent to those skilled in the art from consideration of the specification and practice of the invention disclosed herein. The present disclosure is intended to cover any variations, uses, or adaptations of the present disclosure following the general principles of the present disclosure and including known common knowledge or customary technical means undisclosed in the art of the present disclosure. The specification and embodiments are only considered as exemplary, and the true scope and spirit of the present disclosure are indicated in the appended claims.

## Claims

1. A method for planning a travel path, comprising:
determining an initial path based on current map information;
obtaining an associated region of the initial path;
determining, based on an area of the associated region and the current map information, a proportion of an updated region in the associated region where a map update has occurred; and
determining that the proportion of the updated region is greater than or equal to a first specified threshold, and determining the travel path based on similarity between a corresponding region of the updated region in a historical map and the updated region.

2. The method for planning a travel path according to claim 1, wherein determining the initial path based on the current map information comprises:
determining, based on the current map information, a shortest path between a travel starting point and a travel endpoint of a self-mobile robot as the initial path.

3. The method for planning a travel path according to claim 1, wherein obtaining the associated region of the initial path comprises:
selecting a feature point on the initial path based on scenario information along the initial path, wherein one or more feature points can be selected; and
generating an associated region corresponding to the feature point according to a specified outward expansion strategy by using the feature point as an outward expansion origin.

4. The method for planning a travel path according to any one of claims 1 to 3, wherein
the current map information comprises updated map information and historical non-updated map information other than the updated map information in a current map; and
determining, based on the area of the associated region and the current map information, the proportion of the updated region in the associated region where the map update has occurred comprises:
determining an overlapping region between a region in the current map corresponding to the updated map information and the associated region; and
determining a ratio of an area of the overlapping region to the area of the associated region as the proportion of the updated region in the associated region where the map update has occurred.

5. The method for planning a travel path according to claim 4, wherein determining the travel path based on the similarity between the corresponding region of the updated region in the historical map and the updated region comprises:
determining that the similarity between the corresponding region of the updated region in the historical map and the updated region is greater than or equal to a second specified threshold, and determining the travel path based on a predetermined optimization strategy; or
determining that the similarity between the corresponding region of the updated region in the historical map and the updated region is less than the second specified threshold, and setting the initial path as the travel path.

6. The method for planning a travel path according to claim 5, wherein before determining the travel path based on the similarity between the corresponding region of the updated region in the historical map and the updated region, the method further comprises:
determining, based on the updated map information and the historical non-updated map information, current obstacles and historical obstacles in the associated region, respectively;
performing clustering based on location information of the current obstacles and location information of the historical obstacles, respectively, to obtain a plurality of current obstacle clusters and a plurality of historical obstacle clusters corresponding to the associated region;
determining any one of the current obstacle clusters and any one of the historical obstacle clusters as an obstacle matching set, and traversing the plurality of current obstacle clusters and the plurality of historical obstacle clusters to obtain a plurality of obstacle matching sets, wherein a number of the plurality of obstacle matching sets is a product of a number of the plurality of current obstacle clusters and a number of the plurality of historical obstacle clusters;
for any one of the obstacle matching sets, determining that the current obstacle cluster and the historical obstacle cluster fall within a predetermined relative location range, and determining that the current obstacle cluster matches the historical obstacle cluster; and
determining a proportion of obstacle matching sets, where the current obstacle cluster matches the historical obstacle cluster, out of the plurality of obstacle matching sets, as the similarity between the corresponding region of the updated region in the historical map and the updated region in the associated region.

7. The method for planning a travel path according to claim 5, wherein determining the travel path based on the predetermined optimization strategy comprises:
setting a passable status marker in a gap area between any two adjacent obstacles in the current map information based on historical map information, wherein the passable status marker comprises a historically passed marker, a historically unpassed marker, and a historically difficult-to-pass marker; and
selecting, based on all passable status markers in the current map information, a path with highest smoothness among a plurality of generated candidate paths as the travel path.

8. The method for planning a travel path according to claim 7, wherein selecting, based on all the passable status markers in the current map information, the path with the highest smoothness among the plurality of generated candidate paths comprises:
determining a first target path among the plurality of candidate paths, where the passable status markers associated with a path are all the historically passed markers, and setting the first target path as the travel path; and
determining that the plurality of candidate paths do not comprise the first target path,
determining a second target path among the plurality of candidate paths, where the passable status markers associated with a path do not contain the historically unpassed marker, and setting the second target path as the travel path;
otherwise, selecting a third target path among the plurality of candidate paths, which contains a least number of the historically unpassed markers, as the travel path.

9. The method for planning a travel path according to claim 7, wherein the smoothness of the candidate paths is determined by:
performing weighted summation processing on all the passable status markers in the candidate paths to obtain the smoothness of the candidate paths, wherein a weight of the historically passed marker is higher than a weight of the historically difficult-to-pass marker, and the weight of the historically difficult-to-pass marker is higher than a weight of the historically unpassed marker.

10. A method for planning a travel path, comprising:
determining an initial path based on current map information;
obtaining an associated region of the initial path;
determining, based on an area of the associated region and the current map information, a proportion of an updated region in the associated region where a map update has occurred; and
determining that the proportion of the updated region is less than a first specified threshold, and setting the initial path as the travel path.

11. An apparatus for planning a travel path, comprising:
an initial path determination unit, configured to determine an initial path based on current map information;
an associated region determination unit, configured to obtain an associated region of the initial path;
an update proportion determination unit, configured to determine, based on an area of the associated region and the current map information, a proportion of an updated region in the associated region where a map update has occurred; and
a path planning unit, configured to determine that the proportion of the updated region is greater than or equal to a first specified threshold, and determine the travel path based on similarity between a corresponding region of the updated region in a historical map and the updated region.

12. An apparatus for planning a travel path, comprising:
an initial path determination unit, configured to determine an initial path based on current map information;
an associated region determination unit, configured to obtain an associated region of the initial path;
an update proportion determination unit, configured to determine, based on an area of the associated region and the current map information, a proportion of an updated region in the associated region where a map update has occurred; and
a path planning unit, configured to determine that the proportion of the updated region is less than a first specified threshold, and set the initial path as the travel path.

13. A self-mobile robot, comprising:
at least one processor; and
a memory communicatively connected to the at least one processor,
wherein the memory stores an instruction executable by the at least one processor, and the instruction is configured to implement the method according to any one of claims 1 to 10.

14. A storage medium having a computer-executable instruction stored thereon, wherein the computer-executable instruction is configured to implement a process of the method according to any one of claims 1 to 10.
